# EUROPEAN PATENT APPLICATION

(11) **EP 0 612 810 A2**
(43) Date of publication of application: **31.08.1994**
(21) Application number: 94102800.3
(22) Date of filing: 24.02.1994
(51) Int. Cl.: C08L 83/04, C08K 5/04

(54) **Room temperature-curable organopolysiloxane composition**

(30) Priority: 24.02.1993 JP 35354/93
(71) Applicant: TOSHIBA SILICONE CO., LTD., Tokyo 106 (JP)
(72) Inventor: Nagaoka, Hisayuki, c/o Toshiba Silicone Co., Ltd., Tokyo (JP)
(74) Representative: Hansen, Bernd, Dr. Dipl.-Chem.

(57) **Abstract**

A room temperature-curable organopolysiloxane composition is disclosed, comprising (A) 100 parts by weight of an organopolysiloxane terminated with a silanol group or an alkoxy group, (B) from 0.1 to 30 parts by weight of an organosilicon compound containing more than 2, in average, of hydrolyzable groups bonded to the silicon atom per molecule, (C) from 0.5 to 50 parts by weight of a hydroxyl-containing organic compound capable of swelling a polyolefin resin and, if desired, (D) a requisite amount of a curing catalyst. The composition exhibits satisfactory adhesion to an untreated polyolefin resin to provide sufficient adhesive strength for withstanding practical use.

## Description

### FILED OF THE INVENTION

This invention relates to a room temperature-curable organopolysiloxane composition and more particularly a room temperature-curable adhesive composition exhibiting satisfactory adhesion to a polyolefin resin which is hard to adhere, e.g., polypropylene or polyethylene, and therefore useful as a sealing compound for polyolefin resins.

### BACKGROUND OF THE INVENTION

Polyolefin resins, such as polypropylene and polyethylene, which are non-polar resins, are excellent in not only rigidity despite their lightness but heat resistance and molding properties. Accordingly, they are molded by various molding methods to provide moldings broadly useful as automobile parts, electrical equipment, constructional materials, house furnishings, and daily necessaries.

However, being non-polar, polyolefin resins are very difficult to adhere to other materials for fixing and withstand no practical use when fixed with conventional adhesives.

In order to improve adhesion of the polyolefin resin to those resins, the polyolefin resin has been subjected to a surface treatment, such as a flame treatment, a corona discharge treatment or a treatment with a chromic acid mixture, or a primer treatment with an organotitanium compound, an organoaluminum compound or a chlorinated polyolefin.

However, the surface treatment requires a treatment apparatus therefor, encounters difficulty in giving uniform treatment when applied to a complicatedly shaped or large-sized article, and involves troublesome operation. The primer treatment sometimes requires an apparatus therefor depending on the primer coating method employed. Whichever means one may take, the treatment is involvement of an additional step, making the adhesion operation more complicated.

On the other hand, a room temperature-curable organopolysiloxane composition is widely used as an adhesive or a sealing compound in various fields on account of its excellent adhesion and mechanical characteristics of a cured product thereof, but yet it hardly adheres to polypropylene or polyethylene.

To overcome the above-described technical problem, a method for adhesion between a polypropylene resin and a room temperature-curable silicone rubber composition is disclosed in JP-A-60-135437 (the term "JP-A" as used herein means an "unexamined published Japanese patent application"). This technique is directed to a primer treatment to provide an undercoat layer between adherends, still involving the problem of making the adhesion treatment (operation) complicated.

### SUMMARY OF THE INVENTION

An object of the present invention is to provide a room temperature-curable organopolysiloxane adhesive composition which exhibits satisfactory adhesion to a polyolefin resin, such as polypropylene or polyethylene, without requiring any pretreatment, such as a primer treatment, to provide adhesive strength enough to withstand practical use.

As a result of extensive investigations, the present inventors have found that addition of a hydroxyl-containing organic compound capable of swelling a polyolefin resin to a condensation cure type room temperature-curable organopolysiloxane composition provides a composition having satisfactory adhesion to an untreated polyolefin resin and thus described the above-described object. The present invention has been completed based on this finding.

The present invention relates to a room temperature-curable organopolysiloxane composition comprising
(A) 100 parts by weight of an organopolysiloxane terminated with a silanol group or an alkoxy group,
(B) from 0.1 to 30 parts by weight of an organosilicon compound containing more than 2, in average, of hydrolyzable groups bonded to the silicon atom per molecule,
(C) from 0.5 to 50 parts by weight of a hydroxyl-containing organic compound capable of swelling a polyolefin resin and, if desired,
(D) a requisite amount of a curing catalyst.

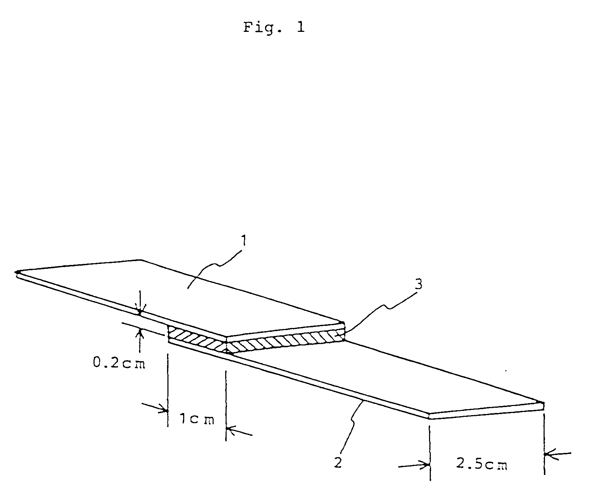

### BRIEF DESCRIPTION OF THE DRAWING

The attached Figure is a perspective view showing a specimen used in Examples for a shearing adhesion test. Numerals 1 and 2 are adherends of the same material, and 3 is an organopolysiloxane composition.

### DETAILED DESCRIPTION OF THE INVENTION

Component (A) is an organopolysiloxane terminated with a silanol group or an alkoxy group, which is generally used in condensation cure type room temperature-curable organopolysiloxane compositions. An organopolysiloxane having a viscosity between 100 and 500,000 cSt at 25°C is preferred for assuring moderate extrudability before curing and providing a cured rubbery product with excellent mechanical properties. If the viscosity is less than 100 cSt, the resulting rubbery product tends to have insufficient mechanical characteristics. If the viscosity exceeds 500,000 cSt, the extrudability of the composition is deteriorated, and also it is difficult to obtain a uniform composition when an inorganic filler is compounded for obtaining satisfactory mechanical characteristics. A particularly preferred viscosity range is from 2,000 to 100,000 cSt.

Component (A) contains organic group which are directly bonded to silicon atoms therein.

The organic groups directly bonded to the silicon atoms of component (A) include alkyl groups, e.g., a methyl group, an ethyl group, a propyl group, a butyl group, and a hexyl group; alkenyl groups, e.g., a vinyl group and an allyl group; aryl groups, e.g., a phenyl group; aralkyl groups, e.g., a 2-phenylethyl group and a 2-phenylpropyl group; and monovalent substituted hydrocarbon groups, e.g., a chloromethyl group, a β-cyanoethyl group, and a 3,3,3-trifluoropropyl group. From the standpoint of ease of synthesis, a methyl group, a vinyl group, and a phenyl group are generally advantageous. Others of the above-enumerated organic groups are recommended only where special properties, such as cold resistance, heat resistance, and oil resistance, and the like are to be imparted to the cured rubbery product. It is preferable that at least 85 mol% of all the organic groups are methyl groups. In this case, an intermediate for component (A) is prepared most easily, component (A) has the least viscosity for the degree of polymerization of siloxane, and extrudability before curing and physical properties of a cured rubbery product are well-balanced. It is more preferable that substantially all the organic groups are methyl groups. It is recommended, however, to use a phenyl group as part of the organic groups when a cured rubbery product is required to have cold resistance or heat resistance, and to use a 3,3,3-trifluoropropyl group as part of the organic groups when oil resistance is demanded.

The terminal silanol group or alkoxy group contributes to curing through reaction with a hydrolysis product of component (B). Examples of the alkoxy group are a methoxy group, an ethoxy group, and an isopropoxy group. Of these terminal groups, a silanol group or a methoxy group are preferred in view of their reactivity.

Component (B) is an organosilicon compound containing more than 2, in average, of hydrolyzable groups bonded to the silicon atom per molecule. Component (B) is hydrolyzed with moisture to become ready to undergo condensation reaction with a silanol group or an alkoxy group of component (A). The hydrolyzable groups include alkoxy groups, e.g., a methoxy group, an ethoxy group, a propoxy group, an isopropoxy group, and a butoxy group; enoxy groups, e.g., a propenoxy group; an isocyanato group; oxime groups, e.g., an acetone oxime group and a butanone oxime group; organoamino groups, e.g., a dimethylamino group, a diethylamino group, a cyclohexylamino group, and an isopropylamino group; and amide groups, e.g., an N-methylacetamide group. Halogen atoms, e.g., a chlorine atom, or acyloxy groups, e.g., an acetoxy group and a benzoxy group, may serve as hydrolyzable groups in some cases but are generally unfavorable because they generate a hydrogen halide or an acid on hydrolysis to cause corrosion and irritation.

In addition to the above-described hydrolyzable groups, component (B) contains substituted or unsubstituted hydrocarbon groups bonded to the silicon atoms thereof which are similar to the organic groups directly bonded to the silicon atoms of component (A). From the standpoint of ease of synthesis and the rate of crosslinking, an alkyl group having from 1 to 8 carbon atoms, an alkenyl group having from 2 to 5 carbon atoms, and a phenyl group are preferred as the organic groups.

Specific examples of component (B) include alkoxysilanes and partial hydrolysis condensation products thereof, e.g., methyltrimethoxysilane, vinyltrimethoxysilane, methyltriethoxysilane, vinyltriethoxysilane, ethyl orthosilicate, and propyl orthosilicate; enoxysilanes and partial hydrolysis condensation products thereof, e.g., methyltriisopropenoxysilane; isocyanatosilanes and partial hydrolysis condensation products thereof, e.g., tetraisocynatosilane and methyltriisocyanatosilane; oxime silanes and partial hydrolysis condensation products thereof, e.g., methyltris(acetone oxime)silane, methyltris(butanone oxime)silane, and vinyltris(butanoneoxime)silane; aminosilanes and partial hydrolysis condensation products, e.g., methyltris (dimethylamino) silane, methyltris (diethylamino) silane, methyltris (isopropylamino) silane, and methyltris(cyclohexylamino)silane; amidosilanes and partial hydrolysis condensation products thereof, e.g., methyltris(N-methylacetamido)silane.

The amount of component (B) used usually ranges from 0.1 to 30 parts, and preferably from 0.5 to 15 parts, by weight per 100 parts by weight of component (A), while varying depending on the amount of the silanol or alkoxy group of component (A) and desired properties of a cured rubbery product. If the proportion of component (B) is less than 0.1 part by weight, crosslinking does not sufficiently proceed. If it exceeds 30 parts by weight, physical properties of a cured product are deteriorated.

The hydroxyl-containing organic compound as component (C) is a characteristic component contributing to development of adhesion to a polyolefin resin. Component (C) is essentially required to contain a hydroxyl group in the molecule thereof and to be capable of swelling a polyolefin resin.

Component (C) includes aliphatic alcohols, substituted aliphatic alcohols, polyhydric alcohols, phenols, and oximes. Other hydroxyl-containing organic compounds, such as ester type alcohols, fatty acids, and ketone type alcohols, do not meet the object of the present invention.

Of the above-described hydroxyl-containing organic compounds, preferred are aliphatic alcohols having a cyclic, straight chain or branched hydrocarbon group containing from 4 to 16 carbon atoms; aliphatic alcohols containing from 2 to 8 carbon atoms substituted with an aromatic hydrocarbon group, a halogen atom or a benzylamino group; aliphatic diols containing from 6 to 18 carbon atoms; phenols; and oximes having at least one of aromatic hydrocarbon groups and cyclic, straight chain or branched aliphatic hydrocarbon groups containing from 2 to 8 carbon atoms.

More preferred are aliphatic alcohols having a cyclic or straight chain hydrocarbon group containing from 4 to 16 carbon atoms; aliphatic alcohols having from 2 to 8 carbon atoms substituted with a halogen atom or a benzylamino group; and oximes having at least one of aromatic hydrocarbon groups and cyclic or straight chain aliphatic hydrocarbon groups containing from 2 to 8 carbon atoms.

Most preferred are aliphatic alcohols having a cyclic hydrocarbon group containing from 4 to 16 carbon atoms; aliphatic alcohols having from 2 to 8 carbon atoms substituted with a halogen atom or a benzylamino group; and oximes having at least one of aromatic hydrocarbon groups and cyclic or straight chain aliphatic hydrocarbon groups containing from 2 to 8 carbon atoms.

Specific examples of the aliphatic alcohols having a cyclic, straight chain or branched hydrocarbon group containing from 4 to 16 carbon atoms are cyclohexanol, 4-methylcyclohexanol, n-hexadecyl alcohol, n-hexyl alcohol, 2-ethylhexanol, 3-hexanol, t-butyl alcohol, and t-amyl alcohol. Specific examples of the substituted aliphatic alcohols having from 2 to 8 carbon atoms are benzyl alcohol, 2-(benzylamino)ethanol, and 2,2,2-trichloroethanol. Specific examples of the diols of polyhydric alcohols are 1,6-hexanediol and 2,5-hexanediol. Specific examples of the phenols are cresol and xylenol. Specific examples of the oximes are benzaldoxime, cyclohexylaldoxime, and n-hexylaldoxime. These hydroxyl-containing organic compounds may be used either individually or in combination of two or more thereof.

The amount of component (C) in the composition ranges from 0.5 to 50 parts, and preferably from 1 to 35 parts, by weight per 100 parts by weight of component (A). If it is less than 0.5 part, no effect of developing adhesion is produced. If it exceeds 50 parts, the composition has reduced curability, or a cured rubbery product has reduced mechanical characteristics.

While some of the compositions of the present invention undergo curing reaction at ambient temperature without the aid of a catalyst depending on the kind of component (B), most of the compositions prefer addition of a curing catalyst as component (D) for acceleration of crosslinking. Examples of suitable curing catalysts include amine compounds, e.g., dimethylhexylamine, diethylhydroxylamine, tetramethylguanidine, and tetramethylguianidinopropyltrimethoxysilane; quaternary ammonium salts, e.g., tetramethylammonium chloride and trimethylhexylammonium chloride; organic acid metal salts, e.g., zinc octanoate and tin octanoate; organotin compounds, e.g., dibutyltin diacetate, dibutyltin dioctoate, dibutyltin dilaurate, dioctyltin dilaurate, and dibutyltin dimaleate; and titanium compounds, e.g., tetrabutyl titanate and 1,3-dioxypropanetitaniumbis(ethylacetoacetate). The amount of component (D) used is not particularly limited. To take an instance, dibutyltin dilaurate is usually added in an amount of from 0.05 to 1 part by weight per 100 parts by weight of component (A).

In addition to the essential components (A) to (C) and optional component (D), the composition of the present invention usually contains inorganic fillers for the purpose of imparting mechanical strength or hardness to a cured rubbery product. Inorganic fillers known in the art, such as fumed silica, precipitated silica, silica aerogel, ground silica, diatomaceous earth, and calcium carbonate, can be used. These inorganic fillers may be used either individually or in combination thereof. They may be used either as such or with their surface treated with an organosilicon compound, e.g., polydimethylsiloxane, octamethylcyclotetrasiloxane or hexamethyldisilazane.

While varying depending the kind of the filler or the end use of the composition, the filler is usually added in an amount of not more than 150 parts by weight per 100 parts by weight of component (A). If the amount of the filler exceeds 150 parts, the composition is not easy to handle before curing, and the resulting cured product does not have sufficient mechanical properties.

If desired, the composition may further contain adhesion improving agents or other modifiers.

The composition of the present invention can be prepared by mixing components (A) to (C) and, if desired, optional components, such as an inorganic filler, a catalyst, and other additives, in a moisture-free atmosphere.

Containing component (C), the composition can be directly applied to an untreated polyolefin resin, e.g., polypropylene or polyethylene, and then cured to provide a cured product with excellent adhesion.

Accordingly, the composition serves as an adhesive or sealing compound for a polyolefin substrate, making it feasible to easily bond a polyolefin substrate that has hitherto been impossible or troublesome. It is thus expected that utility of polyolefin resins, that has been limited due to the poor adhesion despite the possibility of mass-production, will be extended over a broader range.

The present invention will now be illustrated in greater detail with reference to Examples, but the present invention should not be construed as being limited thereto. All the parts are by weight unless otherwise indicated.

### EXAMPLE 1

100 Parts of dimethyl polysiloxane with the both ends thereof terminated with a silanol group and having a viscosity of 10,000 cSt at 25°C and 14 parts of fumed silica (specific surface area: about 200 m²/g) having been surface-treated with dimethyldichlorosilane were uniformly kneaded. In a moisture-free atmosphere, 9 parts of vinyltris(butanone oxime)silane, 0.2 part of dibutyltin dimaleate, and 15 parts of cyclohexanol were added thereto, followed by kneading to obtain a room temperature-curable organopolysiloxane composition.

A pair of polypropylene or polyethylene films shown in Table 1 below each having a length of 8 cm, a width of 2.5 cm, and a thickness of 0.2 cm were bonded together with the resulting composition to prepare a test specimen shown in the Figure. After being aged at 20°C and 55% RH for 7 days, the specimen was subjected to a shearing adhesion test at a pulling speed of 50 mm/min to obtain a shearing adhesive strength (LSS) and a percentage cohesive failure (CF). The results obtained are shown in Table 1 below.

### EXAMPLE 2 AND COMPARATIVE EXAMPLES 1 AND 2

A room temperature-curable organopolysiloxane composition was prepared in the same manner as in Example 1, except for replacing cyclohexanol as component (C) with 1-hexanol (Example 2), excluding cyclohexanol (Comparative Example 1) or replacing cyclohexanol with a compound which does not contain hydroxyl group (Comparative Example 2). Test specimens were prepared using these compositions and tested in the same manner as in Example 1. The results obtained are shown in Table 1 below.

**TABLE 1**

| Example No. | Component (C) | | Polypropylene* | | Polyethylene** | |
|---|---|---|---|---|---|---|
| | Kind | Amount (part) | LSS (kgf/cm²) | CF (%) | LSS (kgf/cm²) | CF (%) |
| Example 1 | Cyclohexanol | 15 | 12.8 | 75 | 11.5 | 60 |
| Example 2 | 1-Hexanol | 15 | 11.0 | 60 | 10.5 | 50 |
| Comparative Example 1 | - | - | 0.4 | 0 | 0.3 | 0 |
| Comparative Example 2 | Cyclohexane | 15 | 1.0 | 0 | 0.5 | 0 |

| | | | | | | |
|---|---|---|---|---|---|---|
| Note: *: Noblen MH8 (a product of Mitsubishi Petrochemical Co., Ltd.) | | | | | | |
| **: Hizex 5000 (a product of Mitsui Petrochemical Industries, Ltd.) | | | | | | |

### EXAMPLE 3

100 Parts of dimethyl polysiloxane with the both ends thereof terminated with a silanol group and having a viscosity of 40,000 cSt at 25°C and 24 parts of fumed silica (specific surface area: about 200 m²/g) having been surface-treated with polydimethylsiloxane were uniformly kneaded. In a moisture-free atmosphere, 8.5 parts of methyltrisisopropenoxysilane, 0.5 part of tetramethylguianidinopropyltrimethoxysilane, and 25 parts of 2,2,2-trichloroethanol were added thereto, followed by kneading to obtain a room temperature-curable organopolysiloxane composition.

A test specimen was prepared using the resulting composition and, after aging, tested in the same manner as in Example 1. The results obtained are shown in Table 2 below.

**TABLE 2**

| Example No. | Component (C) | | Polypropylene* | | Polyethylene** | |
|---|---|---|---|---|---|---|
| | Kind | Amount (part) | LSS (kgf/cm²) | CF (%) | LSS (kgf/cm²) | CF (%) |
| Example 3 | 2,2,2-Trichloroethanol | 25 | 14.2 | 70 | 12.5 | 50 |

| | | | | | | |
|---|---|---|---|---|---|---|
| Note: *: Noblen MH8 (a product of Mitsubishi Petrochemical Co., Ltd.) | | | | | | |
| **: Hizex 5000 (a product of Mitsui Petrochemical Industries, Ltd.) | | | | | | |

### EXAMPLE 4

100 Parts of dimethyl polysiloxane with the both ends thereof terminated with a methyldimethoxysilyl group and having a viscosity of 20,000 cSt at 25°C and 16 parts of fumed silica (specific surface area: about 180 m²/g) having been surface-treated with hexamethyldisilazane were uniformly kneaded. In a moisture-free atmosphere, 4.5 parts of phenyltriethoxysilane, 0.1 part of dibutyltin dilaurate, and 10 parts of benzaldoxime were added thereto, followed by kneading to obtain a room temperature-curable organopolysiloxane composition.

A test specimen was prepared using the resulting composition and, after aging, tested in the same manner as in Example 1. The results obtained are shown in Table 3 below.

**TABLE 3**

| Shearing Adhesive Strength (kgf/cm²) | | | | | |
|---|---|---|---|---|---|
| Example No. | Polypropylene | | Polyethylene | | Chlorinated Polyethylene |
| | Noblen MH 8^{*1} | Polysheet PP^{*2} | Hizex 5000^{*3} | Polysheet PE-EL^{*4} | Elaslen^{*5} |
| Example 4 | 12.7 | 13.5 | 11.0 | 11.4 | 13.1 |

| | | | | | |
|---|---|---|---|---|---|
| Note: *1: A product of Mitsubishi Petrochemical Co., Ltd. | | | | | |
| *2: A product of Shin Kobe Electric Machinery Co., Ltd. | | | | | |
| *3: A product of Mitsui Petrochemical Industries, Ltd. | | | | | |
| *4: A product of Shin Kobe Electric Machinery Co., Ltd. | | | | | |
| *5: A product of Showa Denko K.K. | | | | | |

While the invention has been described in detail and with reference to specific examples thereof, it will be apparent to one skilled in the art that various changes and modifications can be made therein without departing from the spirit and scope thereof.

## Claims

1. A room temperature-curable organopolysiloxane composition comprising
(A) 100 parts by weight of an organopolysiloxane terminated with a silanol group or an alkoxy group,
(B) from 0.1 to 30 parts by weight of an organosilicon compound containing more than 2, in average, of hydrolyzable groups bonded to the silicon atom per molecule, and
(C) from 0.5 to 50 parts by weight of a hydroxyl-containing organic compound capable of swelling a polyolefin resin.

2. A room temperature-curable organopolysiloxane composition as claimed in Claim 1, wherein said composition further comprises (D) a requisite amount of a curing catalyst.

3. A room temperature-curable organopolysiloxane composition as claimed in Claim 1, wherein said organopolysiloxane has a viscosity of from 100 to 500,000 cSt at 25°C.

4. A room temperature-curable organopolysiloxane composition as claimed in Claim 1, wherein said organopolysiloxane has a viscosity of from 2,000 to 100,000 cSt at 25°C.

5. A room temperature-curable organopolysiloxane composition as claimed in Claim 1, wherein said alkoxy group is methoxy, ethoxy or isopropoxy.

6. A room temperature-curable organopolysiloxane composition as claimed in Claim 1, wherein the amount of said organosilicon compound (B) is from 0.5 to 15 parts by weight per 100 parts by weight of component (A).

7. A room temperature-curable organopolysiloxane composition as claimed in Claim 1, wherein said hydrolyzable group is an alkoxy group, an enoxy group, an isocyanato group, an oxime group, an organoamino group, or an amido group.

8. A room temperature-curable organopolysiloxane composition as claimed in Claim 1, wherein the amount of said hydroxyl-containing organic compound (C) is from 1 to 35 parts by weight per 100 parts by weight of component (A).

9. A room temperature-curable organopolysiloxane composition as claimed in Claim 1, wherein said hydroxyl-containing organic compound is selected from aliphatic alcohols having a cyclic, straight chain or branched hydrocarbon group containing from 4 to 16 carbon atoms; aliphatic alcohols containing from 2 to 8 carbon atoms substituted with an aromatic hydrocarbon group, a halogen atom or a benzylamino group; aliphatic diols containing from 6 to 18 carbon atoms; phenols; and oximes having at least one of aromatic hydrocarbon groups and cyclic, straight chain or branched aliphatic hydrocarbon groups containing from 2 to 8 carbon atoms.

10. A room temperature-curable organopolysiloxane composition as claimed in Claim 1, wherein said hydroxyl-containing organic compound is selected from aliphatic alcohols having a cyclic or straight chain hydrocarbon group containing from 4 to 16 carbon atoms; aliphatic alcohols having from 2 to 8 carbon atoms substituted with a halogen atom or a benzylamino group; and oximes having at least one of aromatic hydrocarbon groups and cyclic or straight chain aliphatic hydrocarbon groups containing from 2 to 8 carbon atoms.

11. A room temperature-curable organopolysiloxane composition as claimed in Claim 1, wherein said hydroxyl-containing organic compound is selected from aliphatic alcohols having a cyclic hydrocarbon group containing from 4 to 16 carbon atoms; aliphatic alcohols having from 2 to 8 carbon atoms substituted with a halogen atom or a benzylamino group; and oximes having at least one of aromatic hydrocarbon groups and cyclic or straight chain aliphatic hydrocarbon groups containing from 2 to 8 carbon atoms.

12. A method of adhesion to a polyolefin resin characterized by the application of a composition according to any one of claims 1 to 11.
